# EUROPEAN PATENT SPECIFICATION

(11) **EP 2 235 812 B1**
(45) Date of publication and mention of the grant of the patent: **28.09.2011**
(21) Application number: 08786908.7
(22) Date of filing: 05.08.2008
(51) Int. Cl.: H02K 7/12, F16F 1/373, F16F 1/376, H02P 6/08

(54) **IMPROVED PERMANENT MAGNET SYNCHRONOUS MOTOR**
VERBESSERTER PERMANENTMAGNET-SYNCHRONMOTOR
MOTEUR SYNCHRONE À AIMANT PERMANENT AMÉLIORÉ

(30) Priority: 31.01.2008 IT PN20080007
(43) Date of publication of application: 06.10.2010
(73) Proprietor: Nidec Sole Motor Corporation S.r.l., 33170 Pordenone (IT)
(72) Inventor: RAKESH, Goel, Roorkee 247667 (U.A.) (IN)
(74) Representative: Giugni, Valter
(86) International application number: PCT/EP2008/060300
(87) International publication number: WO 2009/095093

(56) References cited:
- EP-A- 1 432 101
- DE-A1- 4 139 048
- FR-A- 910 199
- JP-A- 2 164 259
- SU-A1- 1 484 523

## Description

This patent application refers to a kind of permanent magnet electric motor, specifically implemented to obtain high efficiency both at low and at high rotation speed, and a laundry washing machine generally known in the art, i.e. provided with a washing tub and with a drum rotating inside said tub, said drum being connected to an outer pulley which is connected, typically by a flexible belt, to the pulley of the electric motor.

Such motors generally do not show specific drawbacks during the washing cycle, when the drum rotates at low speed, usually comprised between 40 and 60 rpm.

Indeed, said kind of motor is designed for the washing phase, during which it rotates at about 500 rpm, and which takes most of the time needed for the whole washing cycle.

However when the spinning phase is started, the motor rotation speed increases in a very remarkable way, being able of reaching, in the present washing machines, also 17.000 rpm and even more.

In this spinning phase the efficiency of that kind of motor decreases dramatically, as well known to the man skilled in the art.

In the facts it is here reminded that in such kind of motor the **counter electromagnetic force (cemf)** generated by the rotor and induced in the stator windings directly opposes to the stator supply electric voltage.

With the increase of the rotor rotation speed, obviously said **cemf** increases, causing the well known consequence that the maximum available voltage for the motor control is being reduced.

As final result the maximum speed is then delimited, due to the effect of said **cemf** which increases correspondently with the increase of the rotation speed.

In order to reduce such drawback, it is known and used in the technique the provision of chocking the stator windings during the high speed rotation, through the use of proper exchange relay and switches.

Such a solution is well known to the man skilled in the art, and therefore it will not further explained.

It is permitted by the fact that, even if in said conditions of high speed working, the generated torque is being remarkably reduced, however such reduction is still acceptable for the specific kind of use, wherein the drum spinning speed, when the laundry load is still stuck to the drum wall, causes only a moderate resistant torque.

Said solution is commonly accepted and preferred as it is functionally correct; however it causes the serious problem that, even if a portion only of the stator winding is linked to the electro-magnetic flux, and therefore it is subjected to said **cemf,** however the whole stator stack is in any case linked to the whole rotor flux.

Straight consequence is then the high energy loss in the iron of that stator stack, caused by the well known "Focault currents", also called "eddy currents" which are being generated and run across the stator stack, finally causing an high energy loss, with corresponding reduction of the motor overall efficiency during said working conditions.

In order to overcome such drawback it is known, for instance from the Pat. Application US 2006/0097604 A1, a kind of solution for a motor with a stator and a rotor with permanent magnets, and provided with a sliding guide to shift the rotor in a sliding and axial way with respect to the stator; said motor is provided with automatic actuation means which control the rotor axial position according to the actual speed, so as to achieve controllable and improved performances even during different rotation speeds.

In particular, when the rotation speed rises at spinning speed, the rotor is being forced towards a more extracted position with respect to the stator, and therefore a lower energy loss is suffered, even if a reduction of the motor torque is suffered, which however in the described operating conditions does not cause specific disadvantages.

Such a solution appears to be theoretically profitable in certain circumstances, when the rotor speed variation is being kept within fair limits, as in the working use exemplified in the cited document.

However in the case of a motor employed in an household washing machine, wherein the motor has to be able of operating between rotation speed limits which can range from 500 rpm to over 17.000 rpm, the solutions described in said Pat. Application do not result to be advantageous, and therefore they cannot be exploited in the specific use in a general household laundry washing machine.

Indeed in the first embodiment of said document, as represented in the relevant figures 1 and 4, the rotor rotation shaft has to overcome a double friction source, in order to be able to axially adjust its position; in the facts the spring 40, axially pressing it, but which does not rotates with it, undoubtedly causes a remarkable friction which restrains and slows down the rotor rotation itself.

A like thing is applicable also to the cam surfaces 373 with respect to the inclined 302 surfaces which take part of the shaft itself:
("Four planar inclined surfaces 302 are formed on one end of the output shaft 30 between ..." see page 2, para. (0027)).

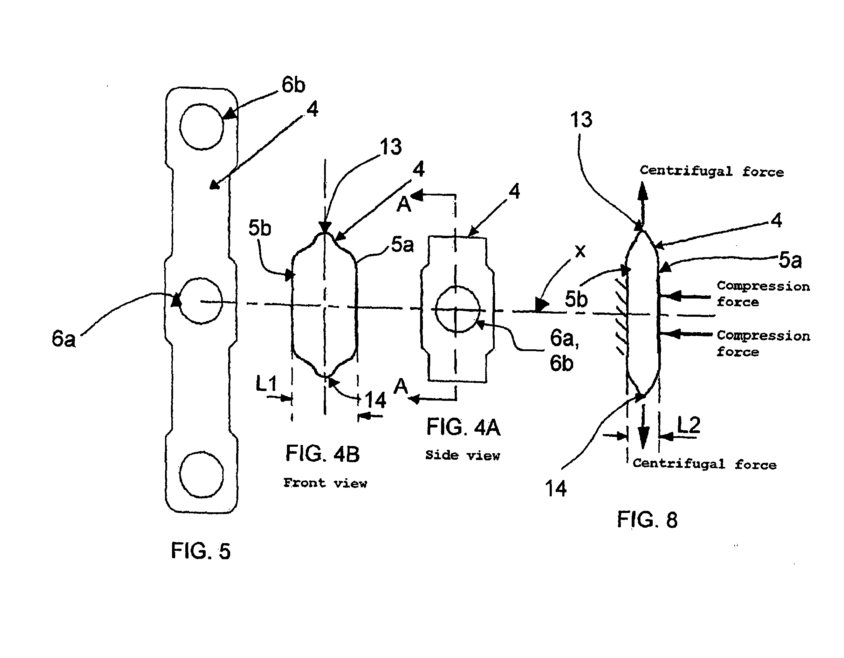

The second embodiment of said pat. application, showed in fig. 5, causes the same drawback of the spring 40 on the head of the rotation shaft, and moreover it turns to be scarcely reliable at high rotation speeds, caused by the complexity of the proposed solution, requiring a precisely symmetrical construction and assembly, and therefore being generally burdensome.

Moreover such solution requires the existence and availability of a not negligible additional room inside or close to the motor, and, even more, the use of the "weights 46" implies an increase of the combined shaft/rotor assembly inertia, what causes a general decay of the motor value, as the man skilled in the art well knows.

From EP 1 432 101 A1 it is divulged a proposed solution for a like problem; in said prior document the propose solution consists of an axial pulling structure and an axial cylindrical pre-stressed spring, wherein said features are intended to perform different functions, i.e. to transfer the rotor torque to the shaft, and to assure that the extraction of the rotor from the respective stator is implemented by the cylindrical spring compression caused by the centrifugal effect on the spring itself.

However even if said solution appears theoretically apt to solve the questioned problem, however it shows some constructive drawbacks due to the complexity of said embodiment, needing as much as 4 different arms, a cylindrical spring which has moreover to be pre-stressed, eight "pivotal joint structures" (SC500), and obviously the corresponding required working time, (i.e. man-hour costs) to be spent for the assembly all the above listed devices. As well known to the man well skilled in the problem, such solution appears to be non acceptable in an industrial and production contest which is permanently required to be competitive at an extreme level.

It is then desirable, and it is the main purpose of the instant invention, to realize:
- a permanent magnet synchronous motor provided with automatic means for the controlled adjustment of the rotor axial position with regard to the stator position, and
- an household laundry washing machine, which is provided with such a motor,
which be able of providing basically the same functional performances of a motor made according the prior art, but with an energy consumption remarkably reduced both at low (washing phase) and at high speed (spinning phase).

According to the present Invention, this and further aims are reached in a kind of electric motor according to the characteristics as recited in the appended claims as described below by mere way of non-limiting example and with reference to the accompanying drawings, in which:
- fig. 1 shows a cross planar section through the rotor X axis in a motor according to the invention, in a first operating condition,
- fig. 2 shows a figure similar to the fig. 1, but with the motor rotating in a second operating condition,
- fig. 3 shows an exploded view of the fig. 2 motor,
- figures 4A and 4B show respective planar and front views of the invention device, as seen from the rotor side and from a sight point orthogonal to it,
- fig. 5 shows a schematic view of the device of figures 4A and 4B, but as seen when extended on a planar surface,
- fig. 6 shows a view similar to fig. 4B, of an improved embodiment of the motor as per the invention,
- fig. 7 shows a view similar to fig. 4B of a further improved embodiment of the invention,
- fig. 8 shows a view similar to fig. 4B, but with the rotor in the high speed condition,
- fig. 9 shows a view of the device of fig. 7, but separate into two symmetrical portions,
- fig. 10 shows a simplified and exploded view of a preferred embodiment of the coupling between the rotor and a shaft in a motor according to the invention,
- fig. 11 shows a planar section view, and which is orthogonal to the motor axis, of the coupling of fig. 10.

With reference to the figures, the permanent magnet synchronous motor according to the invention comprises:
- a stator 1,
- a rotor 2 able of moving with a translation motion along a common axis "X" in different positions with respect to said stator,
- a rotation shaft 3 on which said rotor is keyed, wherein the exact meaning of "keyed" will be better explained later on.

Said motor comprises a spring element 4, preferably implemented through one or more flexible and elastic leaves, which are typically metallic; according to the figures, the spring 4 is a leaf formed as a close perimeter, showing an almost hexagonal shape, or anyway a little prolonged, for the reasons which will be explained later on; in practice, its surface is obtained by the movement of a generation straight line in the space; in the present case, the generating straight line is always orthogonal to said "X" axis.

As showed in the figures 4A, 4B, and 5, said leaf is provided with two parallel and opposed sides **5a** and **5b,** which are orthogonal to said common axis "X".

Inside each of said sides 5a and 5b a respective opening 6a and 6b is created, each being wide enough so that said shaft can be introduced into said openings 5a and 5b, without being solidly connected to it.

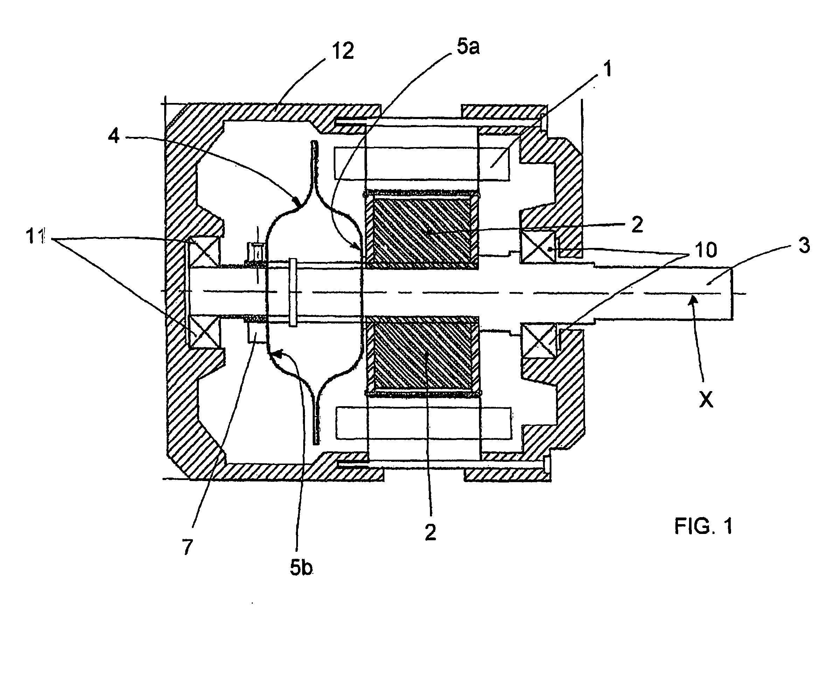

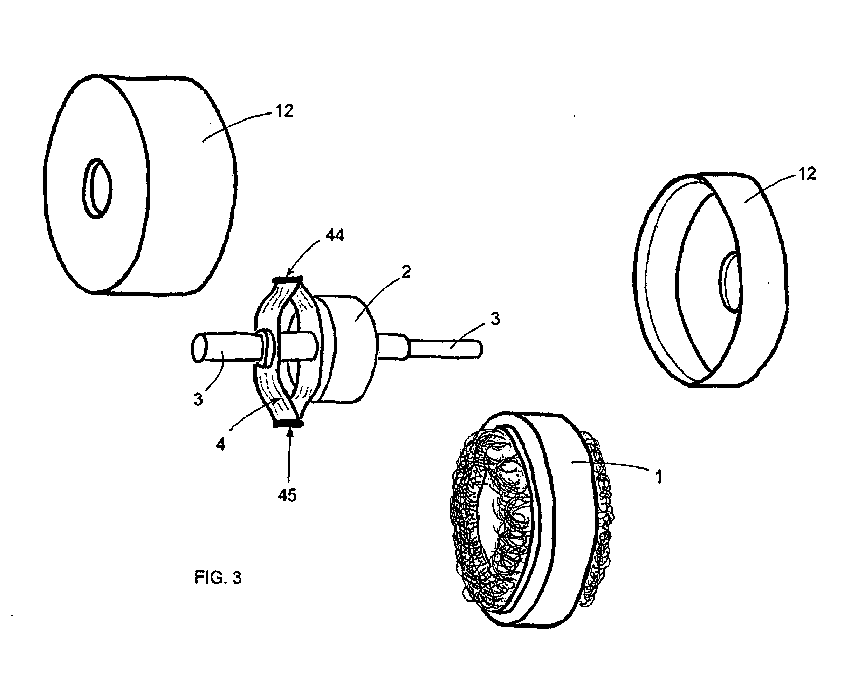

Said elastic leaf 4 is inserted on the shaft 3 as showed in the figures 1 to 3, and then the side 5a oriented towards the rotor, is connected to the corresponding side of it; the opposed side 5b of said spring leaf 4 is firmly connected to an engaging body 7, which is, to its time, solidly connected to said rotating shaft.

It would be enough to simply and firmly connect said side 5b to said rotating shaft through a suitable joining of the edges of the relevant opening 6b to said shaft, but the above proposed solution appears to be cheaper and more reliable.

Moreover the rotating shaft 3 is axially bound with respect to the stator position, meaning that it is supported by two bearing balls **10** and **11** which are firmly applied to the motor frame 12.

Such constructional feature depends in that, in the washing machines known in the art, the belt connected to the drum pulley, and which conveys to it the rotational motion, is obviously engaged to the motor pulley **51** too; as the drum pulley owns a fixed axial position, it comes that the motor axial position has to be fixed too, from which derives the present requirement that the same rotation shaft has to show a constant axial position.

This issue helps also to stress the inadequacy of the cited prior solution; as a matter of facts, according to it, the rotor, being firmly connected to the shaft, changes its axial position accordingly, and this is not allowed in the presently made washing machines, as just explained.

From said consideration it comes apparent and convincing the improvement of the present solution, which on the contrary allows the rotor axial motion, but not the shaft rotating motion.

Said rotor 2 moreover is provided with engaging means with respect to said rotating shaft so as to be able of only axially sliding with respect to it; obviously said means have to be able of assuring that said rotor drags into rotation said rotation shaft 3.

The kind and the embodiment of said means will be better explained later on.

At this point a first description on the way of the invention working can be given: as symbolically shown in **fig. 1****,** when the motor rotates at low speed, the centrifugal force acting on said spring leaf 4, which is dragged into rotation by the shaft 3 through said engagement body 7, is quite low and basically negligible, and if the spring leaf 4 is properly calibrated and sized, it is not sensibly distorted.

Therefore, if in these conditions the initial rotor position is aligned with respect to the stator, the rotor itself holds said position, and the torque it can supply is the maximum, with the lowest energy losses.

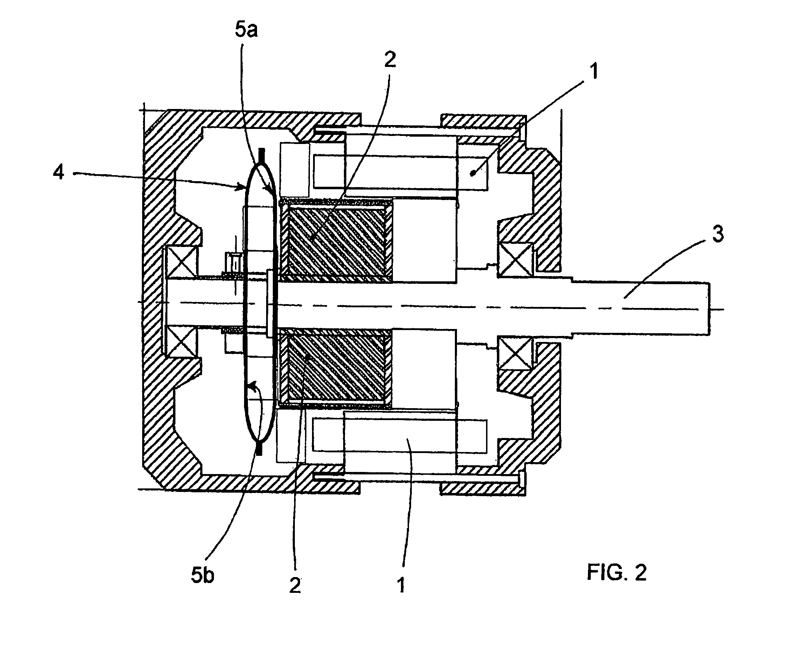

When the rotation speed increases to the highest level, as during the spinning phase, represented in fig. 2, then the centrifugal force increases correspondently, according to the square value of the rotation angular speed, and therefore the spring leaf 4 tends to contract caused by the circumstance that said centrifugal force, acting on the opposed ends **13, 14** far from the leaf "X" axis, projects them outwardly, then forcing the leaf itself to contract, as showed in fig. 8.

Said spring leaf 4 contraction causes the rotor to be pulled by said side **5a** towards the leaf centre, as said side 5b of said spring leaf **4** remains firmly connected to said body 7 (Fig. 2).

And the axial motion of said rotor with respect to the shaft 3 causes its consequent motion with respect to said stator, obviously only in the axial direction.

Just what is the desired, and achieved, purpose.

Indeed the rotor axial motion causes that the electro-magnetic flux links at a lower amount with the stator stack, what obviously reduces the iron losses, with respect to the already described prior art.

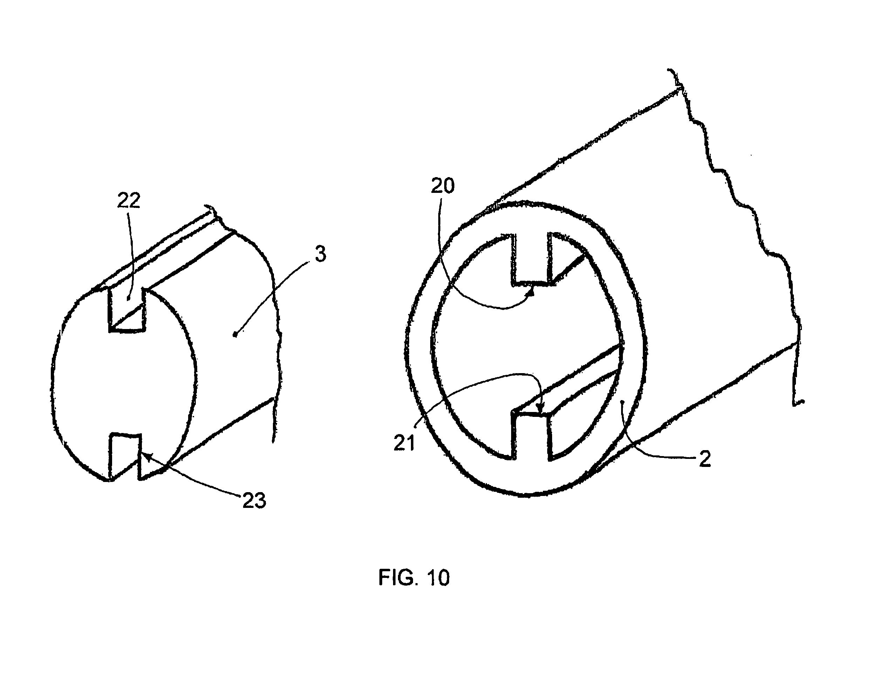

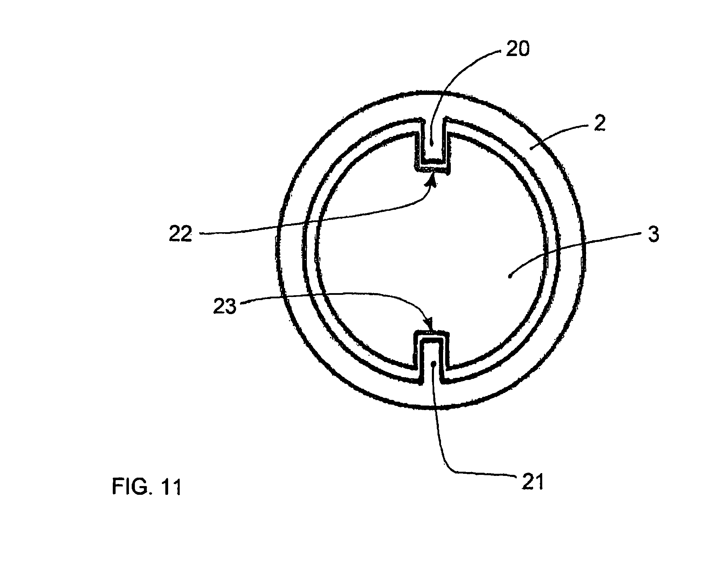

The above explained invention may be further improved by the following advantageous provisions:
a) the first provision refers to the kind of sliding coupling between the shaft and the rotor; naturally such coupling must allow the axial sliding of a body with respect to the other, but not the reciprocal rotation with respect to the same axis; to this purpose said bodies 2 and 3 are provided with suitable engaging and retaining means; in particular, in order not to alter the rotor geometry, its inner surface is provided with at least a retaining means 20, 21, which works as a key which engages to corresponding engaging means 22, 23, placed on the outer surface of the shaft 3, as schematically represented in the figures 10 and 11;
b) the second provision is an improvement; it consists in providing said leaf 4 of at least a weight 44, placed in the farthest position from said "X" axis, and therefore offers an increase of the centrifugal force, and therefore a consequent increase of the spring leaf 4 contraction.
   Profitably, in order to respect the spring leaf 4 symmetry, and therefore not to cause an unbalance with respect to the "X" axis, in the opposed position to said weight 44, with respect to same axis "X", a similar weight 45 too is arranged; in such a way the two weights 44, 45 do not generate any unbalance across said axis; their function will be easily understood by the man skilled in the art; indeed the centrifugal force they generate tends outwards, and therefore it operates as forcing outbound the ends **13, 14** on which said weights are connected, of said leaf 4, which is flexible and elastic. As an obvious consequence the width of the leaf itself is being reduced from a size "L1" to a smaller size "L2", as clearly demonstrated by a simple comparison between the figures 4B and 8.
c) the third provision is still an improvement: in the facts, if the spring leaf 4 is an enbloc (made from a one-piece) leaf, in order it can assume the shapes showed in the figures 4A, 4B, and 8, it must be obviously bent along its whole perimeter, and especially it must be bent on said opposite ends 13, 14 which shows the sharper edges; however even if said ends 13, 14 are only bent, meaning that the leaf 4 is only forced to suitably be bent until it takes the desired shape, it keeps the fact that the leaf is still a continuous body even in these ends; therefore it shows a sensible resistance to the distortion or bending, if forced by a generic centrifugal force.

Therefore the outwards oriented centrifugal force of said weights 44 and 45 has to be high enough to overcome said bending resistance; in practice, as these weights cannot be obviously too heavy (to avoid an unacceptable increase of the spring leaf 4 inertia), the impressed centrifugal force is limited, and so is the leaf distortion or contraction (fig. 8), and finally the extraction sliding run of said rotor, relevant to said leaf contraction, is correspondently limited.

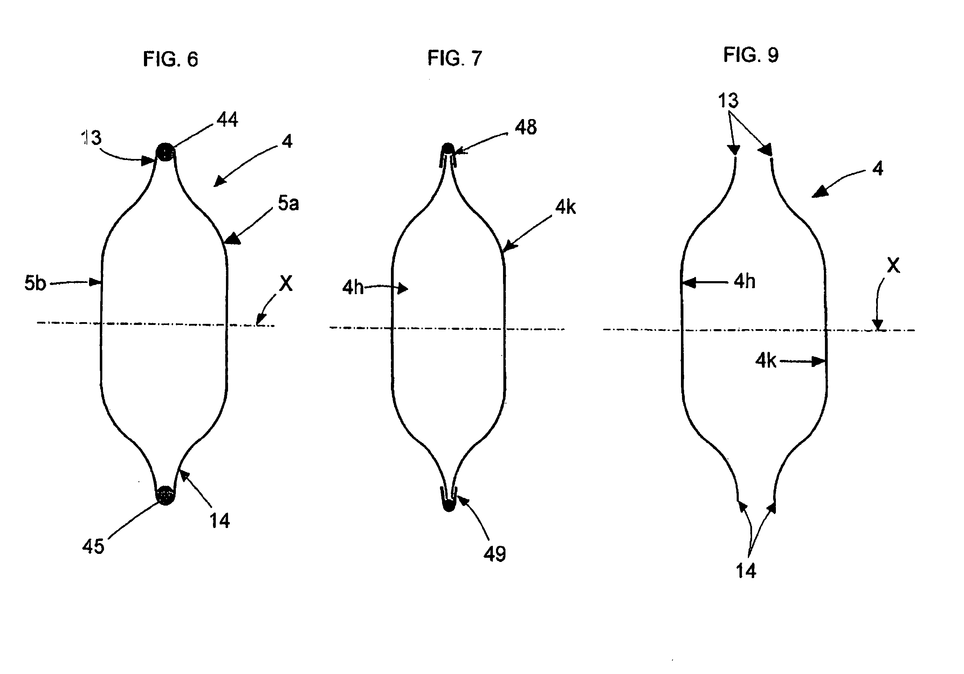

So, in order to avoid such drawback, it is provided that said ends be really apt to be properly shaped and formed; according to the instant improvement, such result is achieved by splitting the leaf into two separate parts **4h** and **4k** as in fig. 9, wherein said ends 13 and 14 are still common ends for both said parts 4h and 4k.

Said parts 4h and 4k are then connected to a respective hinge wing of two hinges **48, 49 (****fig. 7****)** respectively placed at said ends 13, 14, so as to restore the basic body unity of said spring leaf 4.

It will be then apparent that, due to action of these hinges 48, 49, said two leaf parts 4h and 4k may more easily change their positions with respect to said ends 13, 14, said change being caused no more by the distortion, but simply due to the simple reciprocal rotation action of the wings of said hinges 48, 49, so remarkably reducing the resistance to contraction of said spring leaf 4.

As a conclusion such motor offers a particularly efficient operation both at low and at high speed, as said motor becomes a "variable-geometry motor" and such variation is being implemented in a fully automatic way by simply changing its rotation speed to the spinning speed, exactly what needed.

Therefore a washing machine may be provided, whose rotating drum and associated electric motor be able of rotating at low speed during the washing phase, and at high speed during the spinning phase, and moreover provided with a type of motor generally as described.

Moreover said result may be obtained by keeping unchanged the axial position of the pulley 51 keyed to the motor shaft, what is strongly required by the specific use.

This washing machine shows then a precise and measurable improvement of their general performances, and particularly in its aptitude of quickly reach the spinning speed, keeping the energy losses low enough; a further advantage of such machine is moreover offered by the fact that such machines may work with such kind of motor, without any design or constructional change or adjustment, so achieving a precise advantage in terms of investment and design.

## Claims

1. Permanent magnet synchronous motor, comprising:
- a stator (1),
- a rotor (2) able to shift with a translation motion along its axis (X) in different positions with respect to said stator,
- a rotating shaft (3) to which said rotor is keyed,
- actuator means able of detecting the rotation speed of said rotor and to cause an axial motion of it according to said rotation speed, said actuator means comprising an elastic spring element,
said motion being implemented by exploiting the centrifugal force generated by said rotor,
**characterized in that** said elastic spring element (4) is implemented:
- through one flexible and elastic leaf or alternately through two flexible and elastic leaves connected to each other on the respective ends (13, 14),
- both embodiments being shaped as a close perimeter,
- its surface being obtained by the movement of a generation straight line in the space, and always orthogonal to said "X" axis,
- extended on opposite sides with respect to said "X" axis,
- showing a prolonged shape, which extends partially far away from said rotor shaft, and partially close to it,
- said surface being provided with two parallel and opposed sides (5a, 5b), which pass across said shaft at different positions of it, and are orthogonal to said axis "X",
- said elastic spring element (4) showing a sensible resistance to distortion or bending, if forced by a generic centrifugal force,
- said elastic spring element being able of performing both actions of:
a) changing its shape, and particularly to contract according to the rotor speed,
b) transmitting the torque from said rotor to said rotating shaft (3).

2. Permanent magnet motor according to claim 1, **characterized in that** the two opposed sides (5a, 5b) of said spring element (4) are provided with respective openings (6a, 6b) able of lodging said shaft of said rotor, said opposed sides being able of providing an elastic reaction.

3. Synchronous motor according to claim 2, **characterized in that** said spring element comprises at least a weight (44, 45) firmly connected to the outer ends (13, 14) of said spring element which are the farthest from said "X" axis.

4. Synchronous motor according to claims 2 or 3, **characterized in that** said spring element comprises two sub-parts (4h, 4k) which are contiguous, basically identical, and symmetrically arranged with respect to a plane orthogonal to said axis (X).

5. Synchronous motor according to claim 3, **characterized in that** said sub-parts (4h, 4k) are associated at least through a hinge (48, 49) which joints them at least in correspondence to an outer end (13, 14) of said elastic spring element (4).

6. Synchronous motor according to one of the preceding claims, **characterized in that** a side (5a) of said spring element (4) is firmly connected to the body of said rotor.

7. Synchronous motor according to any of the preceding claims, **characterized in that** said stator is engaged to a suitable support frame (12), and that proper means are provided, preferably bearing balls (10, 11), able of preventing the axial motion of said shaft with respect to said stator.

8. Synchronous motor according to claim 6, **characterized in that** the opposite side (5b) of said spring element (4) is firmly engaged to said rotating shaft (3), preferably through a rotating body (7) which is also firmly engaged to said rotating shaft (3) and coaxial to it.

9. Synchronous motor according to any of the preceding claims, **characterized in that** the inner surface of said rotor (2) and the outer surface of said shaft are provided with suitable means able of allowing their reciprocal axial sliding, but not their reciprocal angular rotation.

10. Synchronous motor according to claim 9, **characterized in that** said means for the axial sliding comprise:
- at least a first engaging element (22, 23) placed on the outer surface of said rotating shaft (3),
- and a corresponding second retaining element (20, 21) placed on the inner surface of said rotor (2), said two engaging and retaining means being able of reciprocally, axially and in a sliding way engage to each other.

11. Synchronous motor according to claim 9, **characterized in that** said first engaging element comprises at least a groove axially extended on the outer surface of said rotating shaft, and said second retaining element comprises a prominence axially extended and able of engaging to said groove.

12. Laundry washing machine, especially for household use, provided with a washing tub and with a rotating drum inside it, said drum being linked to an external pulley (51) which is also linked, preferably through a flexible belt, to a pulley of an electric motor, **characterized in that** said electric motor is made up according to the preceding claims.

## Patentansprüche

1. Dauermagnet-Synchronmotor, enthaltend:
- einen Stator (1),
- einen Rotor (2), der in der Lage ist, sich mit einer Translationsbewegung entlang seiner Achse (X) in unterschiedlichen Positionen im Bezug auf den Stator zu verschieben,
- einen Drehwelle (3), mit der der Rotor verzahnt ist,
- eine Betätigungseinrichtung, die in der Lage ist, die Drehzahl des Rotors zu erfassen und eine axiale Bewegung gemäß dieser Drehzahl zu bewirken, wobei die Betätigungseinrichtung ein elastisches Federelement enthält
und die Bewegung durch Ausnutzung der Zentrifugalkraft hervorgerufen wird, die von dem Rotor erzeugt wird,
**dadurch gekennzeichnet, dass** das elastische Federelement (4) ausgeführt ist:
- durch ein flexibles und elastisches Blatt oder alternativ durch zwei flexible und elastische Blätter, die miteinander an den jeweiligen Enden (13, 14) verbunden sind,
- beide Ausführungsformen als geschlossener Umfang geformt sind,
seine Oberfläche durch die Bewegung einer geraden Wirkungslinie in dem Raum und immer orthogonal zu der "X"-Achse erwirkt wird,
- es sich auf gegenüberliegenden Seiten im Bezug auf die "X"-Achse erstreckt,
- es eine längliche Form aufweist, die sich teilweise weit weg von der Rotorwelle und teilweise in dichter Nähe zu dieser erstreckt,
- die Oberfläche mit zwei parallelen und gegenüberliegenden Seiten (5a, 5b) versehen ist, die über die Welle an unterschiedlichen Positionen derselben verlaufen und orthogonal zu der Achse "X" sind,
- das elastische Federelement (4) einen empfindlichen Widerstand gegen Verformung oder Biegen aufweist, wenn auf dieses eine generische Zentrifugalkraft wirkt,
- wobei das elastische Federelement in der Lage ist, die folgenden beiden Tätigkeiten auszuführen:
a) Ändern seiner Form und insbesondere Kontrahieren gemäß der Rotordrehzahl und
b) Übertragen des Drehmomentes von dem Rotor auf die Drehwelle (3).

2. Dauermagnetmotor nach Anspruch 1, **dadurch gekennzeichnet, dass** die beiden gegenüberliegenden Seiten (5a, 5b) des Federelementes (4) mit entsprechenden Öffnungen (6a, 6b) versehen sind, die in der Lage sind, die Welle des Rotors aufzunehmen, wobei die gegenüberliegenden Seiten federnd reagieren können.

3. Synchronmotor nach Anspruch 2, **dadurch gekennzeichnet, dass** das Federelement wenigstens ein Gewicht (44, 45) enthält, das fest mit den Außenenden (13, 14) des Federelementes verbunden ist, die am weitesten von der "X"-Achse entfernt sind.

4. Synchronmotor nach Anspruch 2 oder 3, **dadurch gekennzeichnet, dass** das Federelement zwei Unter-Teile (4h, 4k) enthält, die einander benachbart, im wesentlichen identisch sind und symmetrisch im Bezug auf eine Ebene orthogonal zu der Achse (X) angeordnet sind.

5. Synchronmotor nach Anspruch 3, **dadurch gekennzeichnet, dass** die Unter-Teile (4h, 4k) wenigstens durch ein Scharnier (48, 49) verbunden sind, das sie in Korrespondenz mit einem Außenende (13, 14) des elastischen Federelementes (4) verbindet.

6. Synchronmotor nach einem der vorhergehenden Ansprüche, **dadurch gekennzeichnet, dass** eine Seite (5a) des Federelementes (4) fest mit dem Körper des Rotors verbunden ist.

7. Synchronmotor nach einem der vorhergehenden Ansprüche, **dadurch gekennzeichnet, dass** der Stator mit einem geeigneten Halterahmen (12) in Eingriff steht und dass geeignete Einrichtungen, vorzugsweise Lagerkugeln (10, 11), vorgesehen sind, die in der Lage sind, die axiale Bewegung der Welle im Bezug auf den Stator zu verhindern.

8. Synchronmotor nach Anspruch 6, **dadurch gekennzeichnet, dass** die gegenüberliegende Seite (5b) des Federelementes (4) mit der Drehwelle (3) vorzugsweise durch einen Rotationskörper (7), fest in Eingriff steht, der ebenfalls mit der Drehwelle (3) fest in Eingriff steht und zu dieser koaxial ist.

9. Synchronmotor nach einem der vorhergehenden Ansprüche, **dadurch gekennzeichnet, dass** die Innenfläche des Rotors (2) und die Außenfläche der Welle mit einer geeigneten Einrichtung versehen sind, die in der Lage ist, ein reziprokes axiales Gleiten derselben, nicht jedoch deren reziproke Winkeldrehung zu gestatten.

10. Synchronmotor nach Anspruch 9, **dadurch gekennzeichnet, dass** die Einrichtung für das axiale Gleiten enthält:
- wenigstens ein erstes Eingreifelement (22, 23), das auf der Außenfläche der sich drehenden Welle (3) angeordnet ist,
- und ein entsprechendes zweites Halteelement (20, 21), das auf der Innenoberfläche des Rotors (2) angeordnet ist, wobei die Eingreif- und die Halteeinrichtung in der Lage sind, reziprok, axial und gleitend in Eingriff zu gelangen.

11. Synchronmotor nach Anspruch 9, **dadurch gekennzeichnet, dass** das erste Eingreifelement wenigstens eine Rille enthält, die sich axial auf der Außenoberfläche der Drehwelle erstreckt, und das zweite Halteelement einen Vorsprung aufweist, der sich axial erstreckt und in die Rille greifen kann.

12. Wäschewaschmaschine, insbesondere für die Verwendung im Haushalt, ausgestattet mit einem Waschbottich und mit einer sich drehenden Trommel im Inneren desselben, wobei die Trommel mit einer externen Riemenscheibe (51) verbunden ist, die zudem vorzugsweise durch einen flexiblen Riemen mit einer Riemenscheibe eines Elektromotors verbunden ist, **dadurch gekennzeichnet, dass** dieser Elektromotor gemäß den vorhergehenden Ansprüchen ausgebildet ist.

## Revendications

1. Moteur synchrone à aimant permanent, comprenant :
- un stator (1),
- un rotor (2) apte à se décaler dans un déplacement en translation le long de son axe (X) dans différentes positions par rapport audit stator,
- un arbre rotatif (3) sur lequel ledit rotor est claveté,
- des moyens d'actionnement aptes à détecter la vitesse de rotation dudit rotor et à provoquer un déplacement axial de celui-ci en fonction de ladite vitesse de rotation, lesdits moyens d'actionnement comprenant un élément ressort élastique,
ledit déplacement étant mis en oeuvre par utilisation de la force centrifuge générée par ledit rotor,
**caractérisé en ce que** ledit élément ressort élastique (4) est mis en oeuvre :
- à travers une feuille flexible et élastique ou de manière alternative à travers deux feuilles flexibles et élastiques reliées l'une à l'autre par leurs extrémités respectives (13, 14),
- les deux modes de réalisation étant conformés en un périmètre fermé,
- sa surface étant obtenue par le mouvement dans l'espace d'une ligne droite génératrice, et toujours orthogonale audit axe « X »,
- étendu selon des faces opposées par rapport audit axe « X »,
- présentant une forme prolongée qui s'étend partiellement à distance dudit arbre du rotor et partiellement près de celui-ci,
- ladite surface étant pourvue de deux faces parallèles et opposées (5a, 5b) qui passent à travers ledit arbre en différentes positions de celui-ci, et qui sont orthogonales audit axe « X » ;
- ledit élément ressort élastique (4) montrant une résistance notable à la déformation ou à la flexion lorsqu'il est sollicité par une force centrifuge générique,
- ledit élément ressort élastique étant apte à réaliser les deux actions de :
a) changer sa forme et particulièrement se contracter en fonction de la vitesse du rotor,
b) transmettre le couple dudit rotor audit arbre rotatif (3).

2. Moteur à aimant permanent selon la revendication 1, **caractérisé en ce que** les deux faces opposées (5a, 5b) dudit élément ressort (4) sont équipées d'ouvertures respectives (6a, 6b) aptes à recevoir ledit arbre dudit rotor, lesdites faces opposées étant aptes à fournir une réaction élastique.

3. Moteur synchrone selon la revendication 2, **caractérisé en ce** ledit élément ressort comprend au moins un poids (44, 45) relié fermement aux extrémités extérieures (13, 14) dudit élément ressort qui sont les plus éloignées dudit axe « X ».

4. Moteur synchrone selon la revendication 2 ou 3, **caractérisé en ce que** ledit élément ressort comprend deux sous-parties (4h, 4k) qui sont contigües, essentiellement identiques et agencées de manière symétrique par rapport à un plan orthogonal audit axe (X).

5. Moteur synchrone selon la revendication 3, **caractérisé en ce que** lesdites sous-parties (4h, 4k) sont associées au moins à travers une articulation (48, 49) qui les relie au moins en correspondance avec une extrémité extérieure (13, 14) dudit élément ressort élastique (4).

6. Moteur synchrone selon l'une des revendications précédentes, **caractérisé en ce qu'**une face (5a) dudit élément ressort (4) est fermement reliée au corps dudit rotor.

7. Moteur synchrone selon l'une des revendications précédentes, **caractérisé en ce que** ledit stator est engagé dans un cadre support adapté (12) et **en ce que** des moyens propres sont fournis, de préférence des roulements à billes (10, 11), aptes à empêcher le déplacement axiale dudit arbre par rapport audit stator.

8. Moteur synchrone selon la revendication 6, **caractérisé en ce que** la face opposée (5b) dudit élément ressort (4) est fermement engagée sur ledit arbre rotatif (3), de préférence à travers un corps rotatif (7) qui est aussi fermement engagé sur ledit arbre rotatif (3) et coaxial à celui-ci.

9. Moteur synchrone selon l'une des revendications précédentes, **caractérisé en ce que** la surface intérieure dudit rotor (2) et la surface extérieure dudit arbre sont équipées de moyens aptes à permettre leur glissement axial réciproque, mais pas leur rotation angulaire réciproque.

10. Moteur synchrone selon la revendication 9, **caractérisé en ce que** lesdits moyens pour le glissement axial comprennent :
- au moins un premier élément d'engagement (22, 23) placé sur la surface extérieure dudit arbre rotatif (3),
- et un second élément de retenue correspondant (20, 21) placé sur la surface intérieure dudit rotor (2), lesdits deux moyens d'engagement et de retenue étant aptes à s'engager l'un avec l'autre réciproquement, axialement et en glissement.

11. Moteur synchrone selon la revendication 9, **caractérisé en ce que** ledit élément d'engagement comprend au moins une rainure s'étendant axialement sur la surface extérieure dudit arbre rotatif, et ledit second moyen de retenue comprend une saillie s'étendant axialement et apte à engager ladite rainure.

12. Machine lave-linge, spécialement pour usage domestique, équipée d'une cuve de lavage et d'un tambour rotatif dans celle-ci, ledit tambour étant relié à une poulie externe (51) qui est aussi reliée, de préférence par une courroie flexible, à une poulie d'un moteur électrique, **caractérisée en ce que** ledit moteur électrique est fabriqué selon les revendications précédentes.
